# EUROPEAN PATENT SPECIFICATION

(11) **EP 0 279 415 B1**
(45) Date of publication and mention of the grant of the patent: **04.08.1993**
(21) Application number: 88102247.9
(22) Date of filing: 16.02.1988
(51) Int. Cl.: H02P 5/40

(54) **Induction motor control apparatus**
Regelgerät für Induktionsmotor
Appareil de régulation pour un moteur à induction

(30) Priority: 17.02.1987 JP 34049/87
(43) Date of publication of application: 24.08.1988
(73) Proprietor: MEIDENSHA KABUSHIKI KAISHA, Shinagawa-ku Tokyo 141 (JP)
(72) Inventor: Masakatsu, Nomura, Kamakura-shi Kanagawa-ken (JP); Keiko, Suda, Yokohams-shi Kanagawa-ken (JP); Tadashi, Ashikaga, Tokyo (JP)
(74) Representative: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) References cited:
- EP-A- 0 071 847
- EP-A- 0 121 792
- EP-A- 0 157 202

## Description

### BACKGROUND OF THE INVENTION

This invention relates to an apparatus for vector control of an induction motor according to the pre-characterizing part of claim 1.

Electric power converters or inverters have been employed for the application of adjustable speed drives using alternating ciirrent motors. A typical converter includes a direct current (DC) rectifier for rectifying three-phase AC input voltage and for supplying the resulting direct current (DC) bus potential to an inverter. The inverter comprises a plurality of pairs of series-connected switching elements to generate an adjustable frequency output. In many applications, such a frequency adjustment is effected through a control circuit which employs a pulse width modulation (PWM) control technique in producing variable frequency gating pulses to periodically switch the respective switching elements so as to operate the motor at a variable speed. The motor can be propelled (motoring mode) or retarded (braking mode) as desired by appropriately varying the frequency and the amplitude of the excitation that the inverter applies to the motor.

The actual motor speed is sensed and compared with a commanded motor speed. An speed error signal, which depends on the difference between the actual and desired values of motor speed, is derived and applied to a proportional-plus-integral control circuit which converts it into a torque command signal. The control circuit responds to the torque command signal by controlling the operation of the inverter so as to vary, as a function of the torque command signal, the amplitude of the voltages supplied from the inverter to the motor.

In order to provide more accurate motor control, vector control has been proposed and employed to control the momentary value of the stator current of the induction motor to generate a torque. Slip frequency type vector control employs an induction motor secondary resistance (secondary time constant) in calculating a slip frequency as:

${\text{ω}}_{\text{s}} {\text{= (1/τ₂*) × (i}}_{\text{1β}} {\text{*/i}}_{\text{1α}} \text{*)}$

where τ₂ is the secondary time constant, i_{1α} is the excitation current, i_{1β}* is the torque current. This equation is obtained when a coordinate system is used which coincides with the power phase of the power source. The factors used in calculations are suffixed by the symbol *.

In steady conditions, the α and β components λ̅_{2α} and λ̅_{2β} of the secondary flux are represented as:

${\overline{\text{λ}}}_{\text{2α}} {\text{= M × i}}_{\text{1α}} \text{* × (1 + KI²)/{1 + (KI)²}}$
${\overline{\text{λ}}}_{\text{2β}} {\text{= M × i}}_{\text{1β}} \text{* × (1 - K )/{1 + (KI)²}}$

where M is the mutual inductance of the induction motor, K is the ratio of τ₂/τ₂*, and I is the ratio of i_{1β}*/i_{1α}*.

As can be seen from the equations, the β component of the secondary flux is not zero, resulting in improper vector control when the secondary time constant τ₂* used in calculating the slip frequency is different from the actual secondary time constant τ₂ (or K ≠ 1). When the secondary flux contains a β component, the torque Te of the induction motor is represented as:

${\text{Te = K}}_{\text{T}} \text{× (} {\overline{\text{λ}}}_{\text{2α}} {\text{× i}}_{\text{1β}} \text{-} {\overline{\text{λ}}}_{\text{2β}} \text{× i₁ )}$

where K_{T} is a constant represented as ${\text{K}}_{\text{T}} \text{= P x M²/L₂}$ , P is the pole number, and L₂ is the secondary inductance.

The secondary resistance (secondary time constant) varies by a factor of 1.5 from its initially set value due to ambient temperature changes, load changes, and induction motor secondary conductor temperature changes. The influence of the deviation of the secondary time constant from its actual value is serious particularly for inverters of current control type.

EP-A-0 157 202 is concerned with a digital PWMed pulse generator, in which plural series of digital pattern data are determined by PWMing a sine wave by a triangular carrier wave and further classified into each series by the number of triangles included within a half cycle of the sine wave. An appropriate series of pattern data are selected according to an angular frequency command. The selected data are further adjusted in response to a voltage control ratio command. On the basis of the selected and adjusted pattern data and in response to a half period signal of triangular wave and triangle slope signals, a PWMed pulse is generated through a logical circuit. Such a generator can be incorporated with an induction motor driving system. The logical circuit provides PWMed wave form voltage signals for the respective phases. Finally, a voltage-controlled type inverter supplies a primary voltage in the PWMed wave form to the induction motor in accordance with the voltage signals.

### SUMMARY OF THE INVENTION

It is an object of the present invention to provide a simple induction motor vector-control apparatus which can realize ideal induction motor vector control insensitive to ambient temperature change and induction motor load changes.

The induction motor vector-control apparatus according to the invention is characterized in that said motor drive circuit comprises a current control type inverter and in that said vector control apparatus further includes: means for calculating a correlation coefficient indicative of a mutual relation between the speed error signal and the reference signal and means for modifying the secondary time constant, in accordance with the correlation coefficient, in a direction zeroing the correlation coefficient.

With such an apparatus the induction motor vector-control is not only insensitive to ambient temperature changes but also insensitive to induction motor load changes.

EP-A-0 071 847 discloses a method for determining time constant of a rotor of a rotary magnetic field machine (e.g. induction motor). This time constant determines the direction of a magnetic flux of a model magnetic flux which is simulated on the basis of an input parameter for the time constant of the rotor of the rotary magnetic field machine and a driving parameter (rotor current) of the rotary field machine. A control circuit is provided for generating command values for a stator current regulating circuit in dependence on command values for the flux generating and torque generating components of the stator current. Thus, the stator current is synthesized on the basis of the field generating and torque generating command value according to the simulated magnetic flux direction of the model magnetic flux. A disturbance signal is superimposed on one of the command values and fed to a computing member for determining the correlation between the disturbance signal and an operational value. The operational signal is chosen such that it is independent from the disturbed command value when a correct field direction is provided. With the rotor time constant being set to a value different from the correct value the computing circuit determines a value representative for the correlation between the operational value and the disturbance value. The parameter for the rotor time constant is regulated in accordance with the correlation value until the correlation value is zero.

Thus, this known rotary field machine comprises a usual magnetic flux simulation circuit. Such a magnetic flux simulation model circuit receives the driving data from the rotary magnetic field machine (e.g. the actual value of the stator current) and a parameter for the rotor time constant and outputs a model value of a simulated magnetic flux of the rotary magnetic field machine. The simulated magnetic flux can be calculated as a vector corresponding to an absolute value and a phase angle.

In contrast, according to the present invention no such current model of a magnetic flux simulation circuit is used, so that no inertia moment is effected on the calculation of the secondary time constant. According to the invention, a secondary time constant compensation value is derived on the basis of the speed setting value and reference signal and used to compensate for a change in the secondary time constant used in a slip frequency calculation together with a torque current. Thus, the secondary time constant is not dependent on the load.

### BRIEF DESCRIPTION OF THE DRAWINGS

The features of this invention which are believed to be novel are set forth with particularity in the appended claims. The invention together with its further objects and advantages thereof, may be best understood, however, by reference to the following description taken in conjunction with the accompanying drawings, in which like reference numerals idensify like elements in the several figures and in which:
Fig. 1 is a schematic block diagram showing one embodiment of a induction motor vector control apparatus made in accordance with the invention;
Figs 2A and 2B are graphs used in explaining the operation of the induction motor vector control apparatus of Fig. 1; and
Fig. 3 is a schematic block diagram showing a second embodiment of the invention.

### DETAILED DESCRIPTION OF THE INVENTION

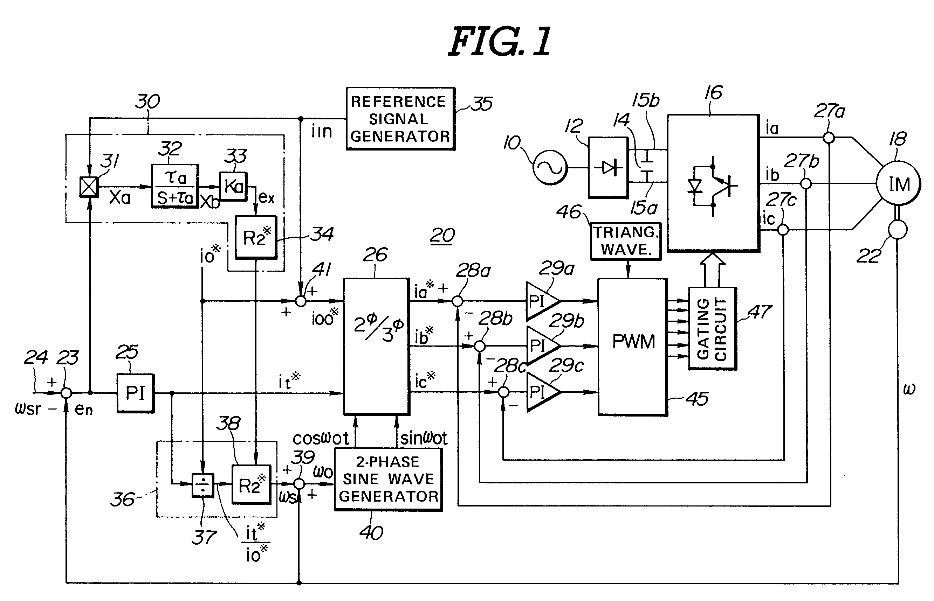

With reference now to the drawings, wherein like numerals refer to like parts in the several views, and particularly to Fig. 1, an adjustable speed motor drive is shown as comprising a converter system 12 which receives electric power from a suitable AC power source 10. The converter system 12 includes a power rectifier which is operative to convert alternating voltage to unipolarity voltage for energizing a DC link shown as the relatively positive conductor 15a and the relative negative conductor 15b. The DC link is spanned by a capacitor 14 which smoothes the rectified power. The unipolarity voltage across the smoothing capacitor 14 is applied to a power inverter 16. The inverter 16 includes a plurality of parallel pairs of series-connected switching elements arranged and controlled to convert the DC input power into AC output power having adjustable frequency and voltage magnitude. For this purpose, each of the switching elements has its controlled electrode coupled to a control circuit 20 which will supply the switching elements with cyclic gate pulses to turn on the switching elements in a predetermined sequence and at a desired frequency. The AC output is supplied to a three-phase induction motor 18 through three output conductors. The induction motor 18 has three-phase stator windings which are energized by the output of the inverter 16 and a rotor coupled to drive a mechanical load (not shown).

The induction motor 18 can be propelled (motoring mode) or retarded (braking mode) as desired by appropriately varying the frequency and the amplitude of the excitation that the inverter 16 applies to the induction motor 18. For this purpose, the control circuit 20 regulates and controls the operation of the inverter 16 in programmed response to a plurality of input signals which may comprise a speed command signal ωₛᵣ representative of the desired motor speed, a feedback signal ω representative of the actual motor rotational speed, and an excitation current command signal iₒ*. The control circuit 20 utilizes a pulse width modulation (PWM) control technique to produce gating pulses so as to periodically switch the respective power transistors of the inverter 16 in accordance with a speed pattern (speed command signal) programmed into the control circuit 20. The inverter 16 produces 3-phase currents ia, ib and ic through the respective output conductors to operate the induction motor 18.

An induction motor speed sensor 22, such for example as a resolver, produces an actual speed signal ω corresponding to the speed of rotation of the induction motor 18. The actual speed signal ω is applied from the speed sensor 22 to a subtractor 23 having another input ωₛᵣ on a line 24. The subtractor 23 subtracts the actual speed signal ω from the speed command signal ωₛᵣ on the line 24 and produces a speed error signal eₙ indicative of the difference between the actual and target speeds of rotation of the induction motor 18. The speed error signal eₙ is applied to a proportional-plus-integral amplifier 25 which converts it into a torque current command signal i_{t*}. This torque current command signal i_{t*} is applied to a 2-phase/3-phase converter 26.

The speed error signal eₙ is also applied to a secondary time constant compensating coefficient generator section 3. The secondary time constant compensating coefficient generator section 30 includes a multiplier 31, a primary delay circuit such as a low pass filter 32, an amplifier 33, and secondary time constant compensating coefficient generator 34. The multiplier 31 has an input coupled to the subtractor 23 and another input coupled to a reference signal generator circuit 35 which produces a sine wave reference signal i₁ₙ. The multiplier 31 multiplies the speed error signal eₙ by the reference signal i₁ₙ and produces a multiplied signal Xa. The multiplied signal Xa is applied to the low pass filter 32 which extracts a DC component from the multiplied signal Xa. A signal Xb is applied from the low pass filter 32 to an amplifier 33 which multiplies the input signal Xb by a multiplier factor K and produces a correlation coefficient indication signal eₓ indicative of a coefficient having a mutual relation between the speed error signal eₙ and the reference signal i₁ₙ. The correlation coefficient indication signal eₓ is applied to the secondary time constant compensating coefficient generator circuit 34. The secondary time constant compensating section 30 calculates a secondary time constant τ₂* and produces a signal indicative of the reciprocal ( $\text{R₂* = 1/τ₂*}$ ) of the secondary time constant τ₂*. This signal is applied to a slip calculation circuit 36.

The slip calculation circuit 36 includes a divider 37 and a multiplier 38. The divider 37 has an input coupled to the proportional-plus-integral circuit 25 and another input coupled to an excitation current calculation circuit (not shown) which produces an excitation current command signal iₒ*. The divider 37 divides the torque command current signal iₜ* by the excitation current command signal iₒ* and produces a signal iₜ*/iₒ. This signal is applied to the multiplier 38 on which the secondary time constant compensating coefficient R₂* is loaded from the secondary time constant compensating coefficient generator 34. The multiplier 38 multiplies the signal iₜ*/iₒ* by the secondary time constant compensating coefficient $\text{R₂* (= 1/τ₂*)}$ 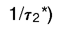 and produces a slip frequency indication signal. The slip frequency indication signal is applied to a summing circuit 39 which adds it to the actual speed signal ω fed thereto from the induction motor speed sensor 22. The added signal ωₒ, which indicates an angular frequency ωₒ, is applied to a 2-phase sine wave generator 40 which thereby generates 2-phase sine waves sin ωₒt and cos ωₒt to the 2-phase/3-phase converter 26.

The excitation current command signal iₒ* is also applied to a summing circuit 41 which receives another input from the signal generator circuit 35. The summing circuit 41 adds the excitation current command signal iₒ* to the reference signal i₁ₙ and produces an added signal iₒₒ*. This signal is applied to the two-phase/three-phase converter 26.

The 2-phase/3-phase converter 26 converts the two-phase sine wave signals sin ωₒt and cos ωₒt into three-phase current command signals ia, ib and ic in accordance with the torque command signal iₜ* and the added signal iₒₒ*. The current command signal iₐ* is applied to a subtractor 28a which receives another input from a current sensor 27a. The subtractor 28a subtracts the actual drive current iₐ from the current command signal iₐ* to produce a current error signal which is applied to a proportional-plus-integral circuit 29a and hence to a pulse width modulation (PMW) waveform generator 45. The current command signal i_{b}* is applied to a subtractor 28b which receives another input from a current sensor 27b. The subtractor 28b subtracts the actual drive current i_{b} from the current command signal i_{b}* to produce a current error signal which is applied through a proportional-plus-integral circuit 29b to the PWM waveform generator 45. Similarly, the current command signal i_{c}* is applied to a subtractor 28c which receives another input from a current sensor 27c. The subtractor 28c subtracts the actual drive current i_{c} from the current command signal i_{c}* to produce a current error signal which is applied through a proportional-plus-integral circuit 29c to the PWM waveform generator 45.

The PWM waveform generator 45 receives a triangle wave signal from a triangle wave generator 46 and controls a gating circuit 47 to produce gating pulses so as to periodically switch the respective power transistors of the inverter 16.

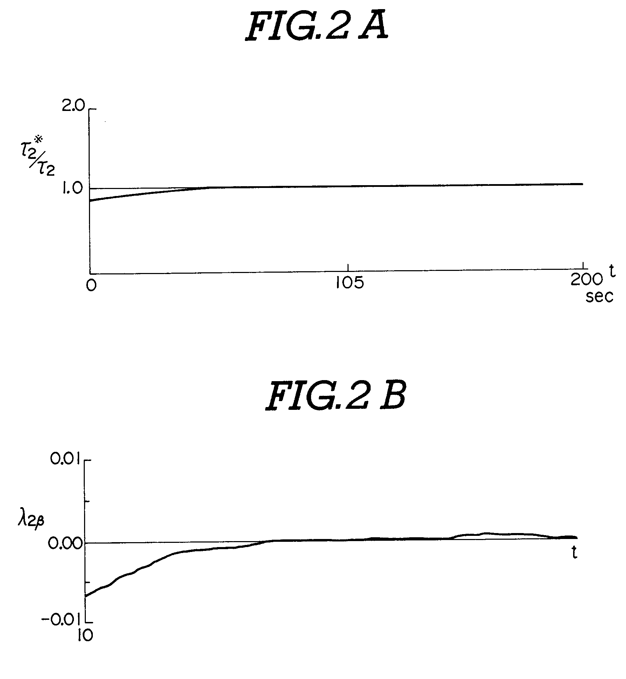

The operation is as follows: When the sine wave reference signal i₁ₙ is applied from the reference signal generator circuit 35 to the summing circuit 41 where it is combined as noise with the excitation current command signal iₒ*, the secondary time constant τ₂* used in calculating a slip frequency will deviate from the actual value τ₂, as shown in Fig. 2A, and the secondary flux will contain a β component λ_{2β}, as shown in Fig. 2B. The β component included in the secondary flux has an effect on the torque Te of the induction motor 18 to vary the speed ω of rotation of the induction motor 18 with the reference signal i₁ₙ. The reference signal i₁ₙ is selected to have a small amplitude, such for example as, an amplitude equivalent to about 10 percents of that of the excitation current command signal iₒ*.

The reference signal i₁ₙ is also applied to the multiplier 31 where it is multiplied by the speed error signal eₙ. The multiplier 31 produces an output Xa represented as ${\text{Xa = e}}_{\text{n}} {\text{x i}}_{\text{in}}$ . The output signal Xa is applied to the low pass filter 32 which extracts a DC component therefrom. The DC component Xb corresponds to the deviation of the secondary time constant τ₂* from the actual value τ₂ and it is represented as:

$\text{Xb = KaXa + KbXb}$

where Ka and Kb are constants dependent on the time constant of the low pass filter 32.

The output signal Xb is applied to the amplifier 33 which produces a correlation coefficient indication signal eₓ having a mutual relation between the speed signal ω and the reference signal i₁ₙ. If the correlation coefficient indication signal eₓ is zero, no β component is contained in the second flux. Therefore, it is apparent that the correlation coefficient eₓ indicates whether or not the β component is contained in the secondary flux. Although the speed error signal eₙ is applied to the multiplier 31, it is to be noted that there is no intention to be limited to such a signal. The actual speed signal w or the like including a component related to the actual speed signal may be applied to the multiplier 31 instead of the speed error signal eₙ. The correlation coefficient indication signal eₓ is given as: 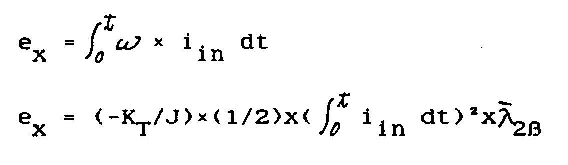
where K_{T} is a constant and J is the moment of inertia.

The correlation coefficient indication signal eₓ is applied to the secondary time constant compensating coefficient generator circuit 34 which may include means for integrating the correlation coefficient eₓ with a sign being determined by the sign of the reference signal i₁ₙ. In other words, the secondary time constant compensating coefficient R₂* varies in a direction zeroing the correlation coefficient eₓ and thus the β component λ_{2β} of the secondary flux in accordance with the correlation coefficient eₓ and the reference signal i₁ₙ. The calculated secondary time constant compensating coefficient R₂*; that is, the reciprocal of the secondary time constant τ₂* is represented as:

${\text{R₂* = R₂* + Xb x sign (i}}_{\text{1n}} \text{)}$

where sign (i₁ₙ) means that Xb is multiplied by a positive sign when the reference signal i₁ₙ is positive and is multiplied by a negative sign when the reference signal i₁ₙ is negative.

The secondary time constant compensating coefficient R₂* is loaded in the multiplier 38 and used in calculating the slip frequency. Therefore, it is possible to compensate the β component of the secondary flux used in calculating the slip frequency, resulting in an optimum induction motor vector control. As can be seen from a study of Figs. 2A and 2B that the β component λ_{2B} of the secondary flux comes closer to zero as the secondary time constant τ₂* used for slip frequency calculations comes closer to the actual secondary time constant τ₂.

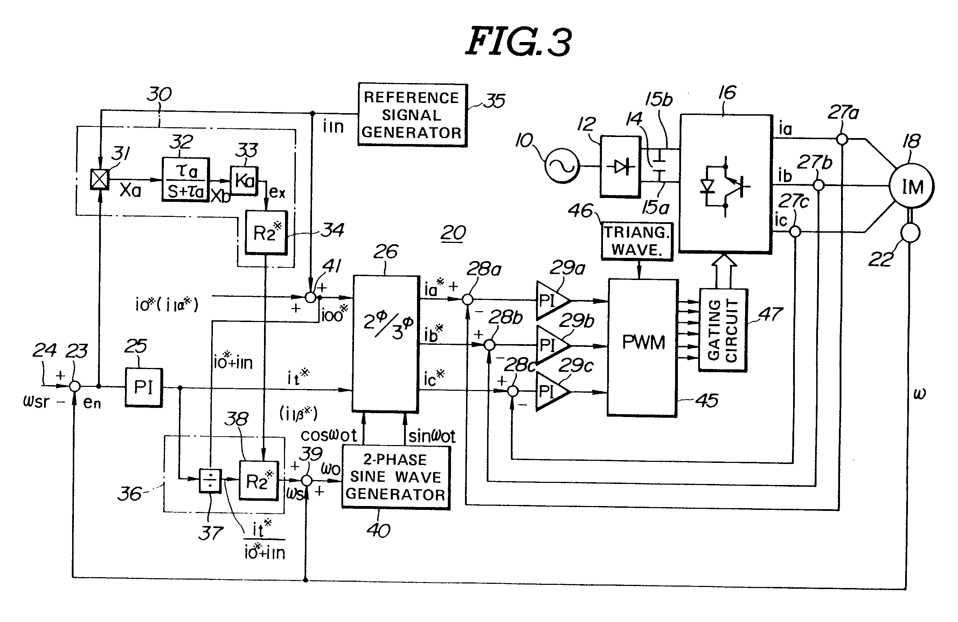

Referring to Fig. 3, there is illustrated another embodiment which differs from the first embodiment only in that the divider 37 receives a signal ${\text{i}}_{\text{oo}} {\text{* (= i}}_{\text{1n}} {\text{+ i}}_{\text{o}} \text{*)}$ from the summing circuit 41 instead of the excitation current command signal iₒ*. This embodiment is effective to compensate the secondary time constant used in calculating a slip frequency with higher accuracy for induction motors having a low secondary time constant.

It is, therefore, apparent that there has been provided, in accordance with this invention, a simple vector control apparatus which can realize ideal induction motor vector control insensitive to ambient temperature changes and induction motor load changes that fully satisfies the objects, aims and advantages set forth above.

Although the invention has been illustrated and described in connection with an analog arrangement, it is to be noted that the vector control apparatus may employ a digital computer to provide the same effect. Appropriate digital devices for the functions of the respective elements of the vector control apparatus would be obvious to one skilled in the art using the description of this specification as the basis for the computer program.

## Claims

1. An apparatus for vector control of an adjustable-speed induction motor (18), including a motor drive circuit (16) for applying power to drive the motor (18), and a control circuit (20) responsive to a torque command signal (iₜ*), an excitation current command signal (iₒ*) and a slip frequency (ωₛ) for controlling the operation of the motor drive circuit so as to vary the power to the motor (18), the control circuit (20) including:
a speed sensor (22) sensitive to motor rotation speed for producing a speed feedback signal (ω) indicative of a sensed speed of rotation of the motor (18);
a source for producing a speed command signal (ω_{Sr}) indicative of a desired motor speed;
a source for producing an excitation current command signal (iₒ*) indicative of a desired motor excitation current;
a source (35) for producing a reference signal (i₁ₙ);
means (23) for summing the speed feedback signal (ω) and speed command signal (ω_{Sr}) to provide a speed error signal (en) indicative of the difference between the sensed and desired motor speeds;
means (25) for converting the speed error signal (en) into the torque command signal (iₜ*);
means (41) for adding the reference signal (i₁ₙ) to the excitation current command signal (iₒ*) applied to the control circuit;
means (36) responsive to the excitation current command signal (iₒ*) and the torque command signal (iₜ*) for calculating the slip frequency (ω_{S}) using a secondary time constant ( $\text{τ₂* = 1/R₂*}$ ),
**characterized** in that
said motor drive circuit (16) comprises a current control type inverter and in that said vector control apparatus further includes:
means (31 -33) for calculating a correlation coefficient (eₓ) indicative of a mutual relation between the speed error signal (eₙ) and the reference signal (i₁ₙ); and
means (34) for modifying the secondary time constant (τ₂*), in accordance with the correlation coefficient (eₓ), in a direction zeroing the correlation coefficient (eₓ).

2. The apparatus as claimed in claim 1, wherein the correlation coefficient calculating means (31- 33) includes a multiplier (31) for multiplying the speed error signal (eₙ) by the reference signal (i₁ₙ) to produce a multiplied signal (Xₐ) indicative of the resulting product, and a primary delay circuit (32) connected to the multiplier (31) for producing a signal (x_{b}) indicative of the correlation coefficient (eₓ).

3. The apparatus as claimed in claim 2, wherein the secondary time constant modifying means (34) includes means for integrating the correlation coefficient indication signal to provide a signal indicative of the reciprocal of the secondary time constant (τ₂*), the secondary time constant indication signal having a sign determined by the reference signal.

4. The apparatus as claimed in claim 3, wherein the slip frequency calculating means (36) includes means (37) for dividing the torque command signal (iₜ*) by the excitation current command signal (iₒ*) to produce a divided signal indicative of the resulting quotient, means (38) for loading the secondary time constant indication signal fed thereto from the secondary time constant modifying means (34), and means for multiplying the divided signal by the loaded secondary time constant indication signal to produce a signal (ω_{S}) indicative of the slip frequency.

5. The apparatus as claimed in claim 3, wherein the slip frequency calculating means (36) includes means (37) for dividing the torque command signal (iₜ*) by the sum of the excitation current command signal (iₒ*) and the reference signal (i₁ₙ) to produce a divided signal indicative of the resulting quotient, means (38) for loading the secondary time constant indication signal fed thereto from the secondary time constant modifying means (34), and means for multiplying the divided signal by the loaded secondary time constant indication signal to produce a signal (ωₛ) indicative of the slip frequency.

## Patentansprüche

1. Vorrichtung zur Vektor-Steuerung eines Induktionsmotors (18) mit einstellbarer Drehzahl, welche enthält eine Motor-Ansteuerschaltung (16) zum Anlegen von Leistung zum Antreiben des Motors (18), und eine Steuerschaltung (20), die auf ein Drehmoment-Befehlsignal (iₜ*) reagiert, ein Erregerstrom-Befehlsignal (iₒ*) und eine Schlupffrequenz (ω_{S}) zum Steuern des Betriebs der Motor-Ansteuerschaltung, um so die Leistung für den Motor (18) zu verändern, wobei die Steuerschaltung (20) enthält:
einen Drehzahl-Fühler (22), der auf die Motordrehzahl anspricht zur Erzeugung eines Drehzahl-Rückkoppelsignals (ω), das für ein erfaßte Drehzahl des Motors (18) bezeichnend ist;
eine Quelle zum Erzeugen eines für eine gewünschte Motordrehzahl bezeichnenden Drehzahl-Befehlsignals (ω_{Sr});
eine Quelle zur Erzeugung eines für einen gewünschten Erregerstrom bezeichnenden Erregerstrom-Befehlsignals (iₒ*);
eine Quelle (35) zum Erzeugen eines Referenzsignals (i₁ₙ);
Mittel (23) zum Summieren des Drehzahl-Rückkoppelsignals (ω) mit dem Drehzahl-Befehlsignal (ω_{Sr}), um ein für die Differenz zwischender erfaßten und der gewünschten Motordrehzahl bezeichnendes Drehzahl-Fehlersignal (eₙ) zu schaffen;
Mittel (25) zum Wandeln des Drehzahl-Fehlersignals (eₙ) in das Drehmoment-Befehlsignal (iₜ*);
Mittel (41), um das Referenzsignal (i₁ₙ) zu dem an die Steuerschaltung angelegten Strombefehlsignal (iₒ*) zu addieren,
auf das Erregerstrom-Befehlsignal (iₒ*) und das Drehmoment-Befehlsignal (iₜ*) reagierendes Mittel (36), um die Schlupffrequenz (ω_{S}) unter Benutzung einer sekundären Zeitkonstante ( $\text{τ₂* = 1/R₂*}$ ) zu errechnen ,
dadurch **gekennzeichnet,** daß
die Motor-Ansteuerschaltung (16) einen Inverter vom Stromsteuertyp umfaßt und daß die Vektor-Steuervorrichtung weiter enthält:
Mittel (31 - 33) zum Berechnen eines für die gegenseitige Beziehung zwischen dem Drehzal-Fehlersignal (eₙ) und dem Rferenzsignal (i₁ₙ) bezeichnenden Korrelationskoeffizienten (eₓ); und
Mittel (34) zum Modifizieren der sekundären Zeitkonstante (τ₂*) in Übereinstimmung mit dem Korrelationskoeffizienten (eₓ) in einer Richtung, die den Korrelationskoeffizienten (eₓ) zu Null bringt.

2. Vorrichtung nach Anspruch 1, bei der das Korrelationskoeffizient-Berechnungsmittel (31 - 33) enthält einen Multiplizierer (31) zum Multiplizieren des Drehzahlfehlersignals (eₙ) mit dem Referenzsignal (i¹ₙ), um ein für das sich ergebende Produkt bezeichnendes multipliziertes Signal (Xₐ) zu erzeugen, und eine an dem Multiplizierer (31) angeschlossene primäre Verzögerungsschaltung (32), um ein für den Korrelationskoeffizienten (eₓ) bezeichnendes Signal (X_{b} zu schaffen.

3. Vorrichtung nach Anspruch 2, bei der das Sekundärzeitkonstanten-Modifizierungsmittel (34) Mittel enthält zum Integrieren des den Korrelationskoeffizienten bezeichnenden Signals, um ein für den Reziprokwert der sekundären Zeitkonstante (τ₂*) bezeichnendes Signal zu schaffen, wobei das die sekundäre Zeitkonstante bezeichnende Signal ein durch das Referenzsignal bestimmtes Vorzeichen hat.

4. Vorrichtung nach Anspruch 3, bei der das Schlupffrequenz-Berechnungsmittel (36) enthält Mittel (37), um das Drehmoment-Befehlsignal (iₜ*) durch das Erregerstrom-Befehlsignal (iₒ*) zum Erzeugen eines für den sich ergebenden Quotienten bezeichnenden dividierten Signals zu dividieren, Mittel (38), um das von dem Sekundärzeitkonstanten-Modifizierungsmittel (34) zugeleitete SekundärzeitkonstantenBezeichnungssignal zu laden, und Mittel, um das dividierte Signal mit dem geladenen Sekundärzeitkonstanten-Bezeichnungssignal zu multiplizieren, um ein für die Schlupffrequenz bezeichnendes Signal (ω_{S}) zu erzeugen.

5. Vorrichtung nach Anspruch 3, bei der das SchlupffrequenzBerechnungsmittel (36) enthält Mittel (37), um das Drehmoment-Befehlsignal (iₜ*) durch die Summe aus dem Erregerstrom-Befehlsignal (iₒ*) und dem Referenzsignal (i₁ₙ) zum Erzeugen eines für den sich ergebenden Quotienten bezeichnenden dividierten Signals zu dividieren, Mittel (38), um das von dem Sekundärzeitkonstanten-Modifizierungsmittel (34) zugeleitete Sekundärzeitkonstanten-Bezeichnungssignal zu laden, und Mittel, um das dividierte Signal mit dem geladenen Sekundärzeitkonstanten-Bezeichnungssignal zu multiplizieren, um ein für die Schlupffrequenz bezeichnendes Signal (ω_{S}) zu erzeugen.

## Revendications

1. Appareil de commande vectorielle d'un moteur à induction à vitesse réglable (18), comportant un circuit (16) d'entraînement de moteur servant à appliquer une alimentation électrique afin d'entraîner le moteur (18), et un circuit de commande (20) qui répond à un signal d'instruction de couple (iₜ*), un signal d'instruction de courant d'excitation (iₒ*) et une fréquence de glissement (ωₛ) en commandant le fonctionnement du circuit d'entraînement de moteur de manière à faire varier l'alimentation électrique appliquée au moteur (18), le circuit de commande (20) comportant:
un détecteur de vitesse (22) qui répond à la vitesse de rotation du moteur en produisant un signal de réaction de vitesse (ω) indicatif de la vitesse de rotation détectée du moteur (18);
une source servant à produire un signal d'instruction de vitesse (ωₛᵣ) indicatif d'une vitesse de moteur voulue;
une source servant à produire un signal d'instruction de courant d'excitation (iₒ*) indicatif d'un courant d'excitation voulu pour le moteur;
une source (35) servant à produire un signal de référence (i₁ₙ);
un moyen (23) servant à additionner le signal de réaction de vitesse (ω) et le signal d'instruction de vitesse (ωₛᵣ) afin de produire un signal d'erreur de vitesse (eₙ)indicatif de la différence entre les vitesses détectée et voulue du moteur;
un moyen (25) servant à convertir le signal d'erreur de vitesse (eₙ) en le signal d'insttuction de couple (iₜ*);
un moyen (41) servant à ajouter le signal de référence (i₁ₙ) au signal d'instruction de courant d'excitation (iₒ*) appliqué au circuit de commande;
un moyen (36) qui répond au signal d'instruction de courant d'excitation (iₒ*) et au signal d'instruction de couple (iₜ*) en calculant la fréquence de glissement (ωₛ) à l'aide d'une constante de temps secondaire ( $\text{τ₂* = 1/R₂*}$ ),
caractérisé en ce que
ledit cùcuit d'entraînement de moteur (16) comprend un onduleur du type à commande par courant et en ce que ledit appareil de commande vectorielle comporte en outre :
un moyen (31 à 33) servant à calculer un coefficient de corrélation (eₓ) indicatif d'une relation mutuelle entre le signal d'erreur de vitesse (eₙ) et le signal de référence (i₁ₙ); et
un moyen (34) servant à modifier la constante de temps secondaire (τ₂*), en fonction du coefficient de corrélation (eₓ), dans un sens qui annule le coefficient de corrélation (eₓ).

2. Appareil selon la revendication 1, où le moyen (31 à 33) de calcul du coefficient de corrélation comporte un multiplicateur (31) servant à multiplier le signal d'erreur de vitesse (eₙ) par le signal de référence (i₁ₙ) afin de produire un signal multiplié (Xₐ) indicatif du produit résultant, et un circuit retardateur principal (32) connecté au multiplicateur (31) afin de produire un signal (X_{b}) indicatif du coefficient de corrélation (eₓ).

3. Appareil selon la revendication 2, où le moyen (34) de modification de la constante de temps secondaire comporte un moyen servant à intégrer le signal indicatif du coefficient de corrélation afin de produire un signal indicatif de l'inverse de la constante de temps secondaire (τ₂*), le signal indicatif de la constante de temps secondaire ayant un signe qui est déterminé par le signal de référence.

4. Appareil selon la revendication 3, où le moyen (36) de calcul de la fréquence de glissement comporte un moyen (37) servant à diviser le signal d'instruction de couple (iₜ*) par le signal d'instruction de courant d'excitation (iₒ*) afin de produire un signal divisé indicatif du quotient résultant, un moyen (38) servant a charger le signal indicatif de la constante de temps secondaire qui est fourni en provenance du moyen (34) de modification de la constante de temps secondaire, et un moyen servant à multiplier le signal divisé par le signal indicatif de la constante de temps secondaire chargé afin de produire un signal (ωₛ) indicatif de la fréquence de glissement.

5. Appareil selon la revendication 3, où le moyen (36) de calcul de la fréquence de glissement comporte un moyen (37) servant à diviser le signal d'instruction de couple (iₜ*) par la somme du signal d'instruction de courant d'excitation (iₒ*) et du signal de référence (i₁ₙ)afin de produire un signal divisé indicatif du quotient résultant, un moyen (38) servant à charger le signal indicatif de la constante de temps secondaire qui lui est fourni est provenance du moyen (34) de modification de la constante de temps secondaire, et un moyen servant à multiplier le signal divisé par le signal indicatif de la constante de temps secondaire chargé afin de produire un signal (ωₛ) indicatif de la fréquence de glissement.
